# FASCICULE DE BREVET EUROPEEN

(11) **EP 0 927 115 B1**
(45) Date de publication et mention de la délivrance du brevet: **07.06.2000**
(21) Numéro de dépôt: 97919114.5
(22) Date de dépôt: 17.09.1997
(51) Int. Cl.: B60R 21/22

(54) **Montage d'un module de coussin de sécurité notamment dans un élément de siège de véhicule automobile**
Airbagmodul-Anordnung, insbesondere in einem Teil eines Kraftfahrzeugsitzes
Mounting an air bag module particularly in a seat element of a motor vehicle

(30) Priorité: 17.09.1996 FR 9611299
(43) Date de publication de la demande: 07.07.1999
(73) Titulaire: CENTRE D'ETUDES ET RECHERCHE POUR L'AUTOMOBILE ( CERA), F-51100 Reims (FR)
(72) Inventeur: PATTE, Damien, F-51490 Epoye (FR); GUSTIN-LEROUGE, José, F-08310 Machault (FR)
(74) Mandataire: Geismar, Thierry
(86) Numéro de dépôt international: FR9701639
(87) Numéro de publication internationale: WO9812076

(56) Documents cités:
- GB-A- 2 293 355
- GB-A- 2 296 476
- US-A- 5 498 030

## Description

La présente invention concerne un montage de coussin de sécurité de véhicule automobile.

On connaît les coussins de sécurité de véhicule automobile, notamment tel que défini dans le préambule de la revendication 1. En cas de choc, détecté par un accéléromètre, ces coussins sortent du logement dans lequel ils sont stockés à l'état plié, sont brutalement gonflés, et protègent ainsi les passagers en s'interposant entre ces derniers et tout élément potentiellement dangereux de la structure du véhicule.

Les coussins de sécurité les plus connus sont ceux qui sont logés devant les passagers avant, par exemple dans le volant ou dans la planche de bord. Ils protègent les passagers avant en cas de choc frontal. Mais il existe aussi des coussins de sécurité destinés à protéger les passagers en cas de choc latéral.

Ces derniers coussins de sécurité peuvent notamment être logés dans les sièges du véhicule, et plus particulièrement dans leurs dossiers. Dans ce cas, il est prévu une couture de l'enveloppe du siège dont la résistance est déterminée de manière qu'elle puisse se déchirer, ou éclater, sous l'effet du gonflement du coussin (voir par exemple GB-A-2 293 355).

Par ailleurs, on réalise de plus en plus souvent les éléments de sièges de véhicules automobiles en utilisant la technique de moulage dite "in situ". Dans cette technique, une mousse de garniture est directement injectée dans un moule dont la paroi intérieure est recouverte de l'enveloppe de l'élément, généralement textile. On obtient ainsi directement ledit élément à la sortie du moule, avec la mousse garnissant l'enveloppe.

Il s'est malheureusement avéré qu'il n'était pas possible d'utiliser telle quelle la technique de moulage in situ pour le moulage d'éléments de sièges contenant un coussin de sécurité. En effet, il se produit à l'instant du gonflement de celui-ci une véritable explosion qui, non seulement fait éclater. la couture prévue à cet effet, mais aussi projette par l'ouverture ainsi réalisée des morceaux de mousse. Ces derniers, bien que légers, possèdent une vitesse telle qu'ils peuvent occasionner de sérieuses blessures aux occupants du véhicule, notamment aux yeux.

La présente invention vise à pallier ces inconvénients, et plus particulièrement à fournir un mode de montage d'un module de coussin de sécurité, dans un élément de siège de véhicule automobile moulé in situ.

A cet effet, l'invention a pour objet un élément de véhicule automobile, susceptible de recevoir un coussin de sécurité et possédant une enveloppe munie d'une couture déchirable sous l'effet du gonflement dudit coussin, caractérisé par le fait qu'il comporte une paroi raccordée à ladite enveloppe aux environs de ladite couture déchirable de manière à limiter avec l'enveloppe un volume où la mousse est confinée lorsque ladite couture est déchirée, ledit coussin étant disposé à l'extérieur dudit volume.

Dans un mode de réalisation particulier, ladite paroi forme une poche agencée pour recevoir le coussin, ladite poche possédant une ouverture dont les bords sont reliés aux lèvres de ladite couture déchirable.

Ainsi, le coussin n'est pas en contact avec la mousse. Lorsqu'il se gonfle, il écarte les bords de l'ouverture de la poche qui le contient, ce qui entraîne un écartement des lèvres de la couture déchirable et l'éclatement de cette dernière. La mousse étant contenue à l'extérieur de la poche, ne peut être projetée par l'ouverture de la couture.

On notera ici que, lorsque l'on indique que les bords de l'ouverture de la poche sont reliés aux lèvres de la couture déchirable, on entend que cette liaison peut être réalisée par tout moyen convenable, et donc non seulement par couture, mais aussi par soudure, collage ou autre.

Dans un mode de réalisation particulier, lesdites lèvres forment deux bordures rentrant à l'intérieur dudit élément, les bords de l'ouverture de la poche étant reliés auxdites lèvres.

Plus particulièrement, lesdits bords de l'ouverture de la poche peuvent être retournés et reliés sur leur envers auxdites lèvres.

Ladite ouverture de la poche et ladite couture peuvent s'étendre longitudinalement au-delà du logement du coussin de sécurité.

Le logement du coussin de sécurité possède en effet des dimensions relativement restreintes. L'agencement précédent permet au coussin, lorsqu'il a été gonflé, de s'étendre sur toute la longueur souhaitée en fonction de la protection demandée pour les passagers.

Ladite poche peut être réalisée en feuilles de non tissé.

La poche peut en effet être réalisée dans un matériau moins coûteux que l'enveloppe, se trouvant à l'intérieur de l'enveloppe et de la mousse qui la garnit. On remarquera d'ailleurs que les deux cotés de la couture peuvent être réalisés dans des matériaux différents, pour des raisons esthétiques ou autres.

Dans un mode de réalisation particulier, l'élément selon l'invention comprend une partie rapportée fermant l'emplacement de ladite poche et sur laquelle est fixé ledit coussin de sécurité.

Il est ainsi possible de réaliser le moulage in situ sans le coussin de sécurité, et de n'introduire ce dernier qu'ultérieurement.

On décrira maintenant, à titre d'exemple non limitatif, un mode de réalisation particulier de l'invention, en référence aux dessins schématiques annexés dans lesquels:
- la figure 1 est un schéma en coupe horizontale illustrant le principe de l'invention;
- la figure 2 est une vue de côté d'un dossier de siège de véhicule automobile réalisé selon l'invention;
- la figure 3 est une vue en coupe selon la ligne III-III de la figure 2;
- la figure 4 est une vue à plus grande échelle du détail IV de la figure 3;
- la figure 5 est une vue en coupe selon l'une quelconque des lignes V-V et V'-V' de la figure 2; et
- la figure 6 est une vue en coupe selon la ligne VI-VI de la figure 2.

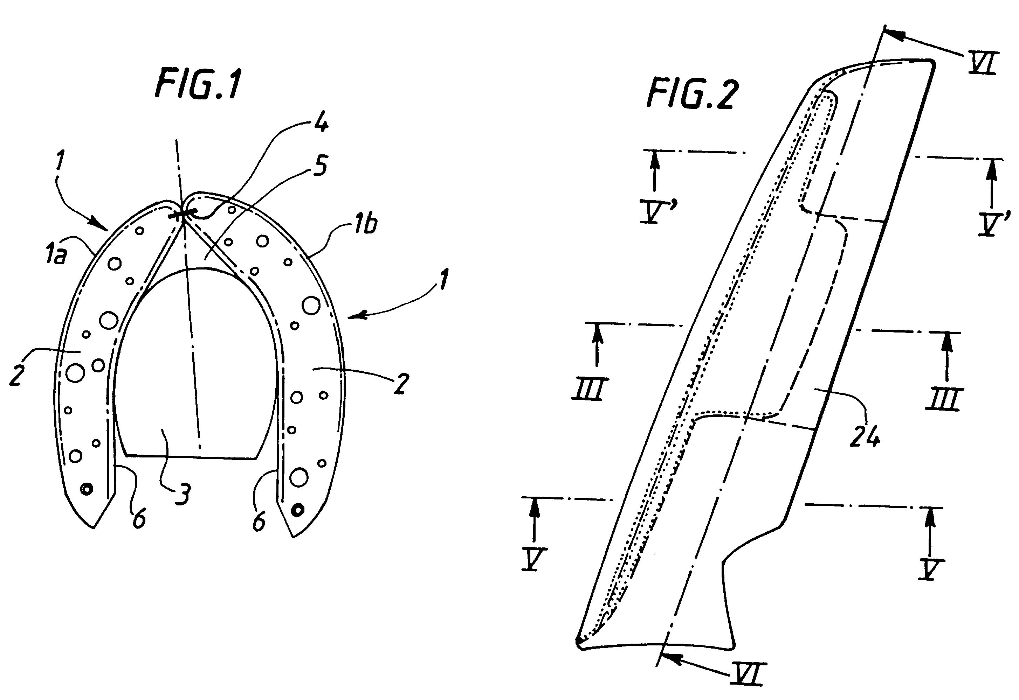

La figure 1 montre un élément de véhicule automobile réalisé selon l'invention, notamment un dormant de siège, possédant une enveloppe extérieure 1. Cette enveloppe est garnie d'une mousse 2, ici moulée in situ dans l'enveloppe 1. Cet ensemble contient un coussin gonflable de sécurité 3, en fait un module comprenant ce coussin associé à ses équipements de détection de choc et de gonflage.

L'enveloppe 1 est réalisée ici en deux parties 1a et 1b réunies par une couture 4, cette couture étant agencée pour se rompre sous l'effet du gonflement du coussin 3, ce gonflement se produisant lui-même lors d'un choc exercé dans une direction donnée sur le véhicule, notamment latéralement.

Selon l'invention, le coussin 3 est contenu dans une poche 5 dont la paroi 6, constituée par exemple de feuilles de non tissé, se raccorde à l'enveloppe 1 aux environs de la couture 4, de la manière qui sera décrite en référence aux figures 2 à 6. L'enveloppe 1 et la paroi 6 de la poche 5 sont ouvertes vers l'arrière (bas de la figure 1), pour permettre le montage du coussin gonflable 3.

On constate donc que la mousse 2 n'occupe que le volume limité compris entre l'enveloppe 1 et la paroi 6. Lorsque le coussin se gonfle, il fait éclater la couture 4, mais la mousse 2 reste confinée dans ce volume limité, et ne peut de ce fait être propulsée dans l'habitacle du véhicule.

On a repris sur les figures 2 à 6 les références de la figure 1 auxquelles on a ajouté le chiffre des dizaines 1.

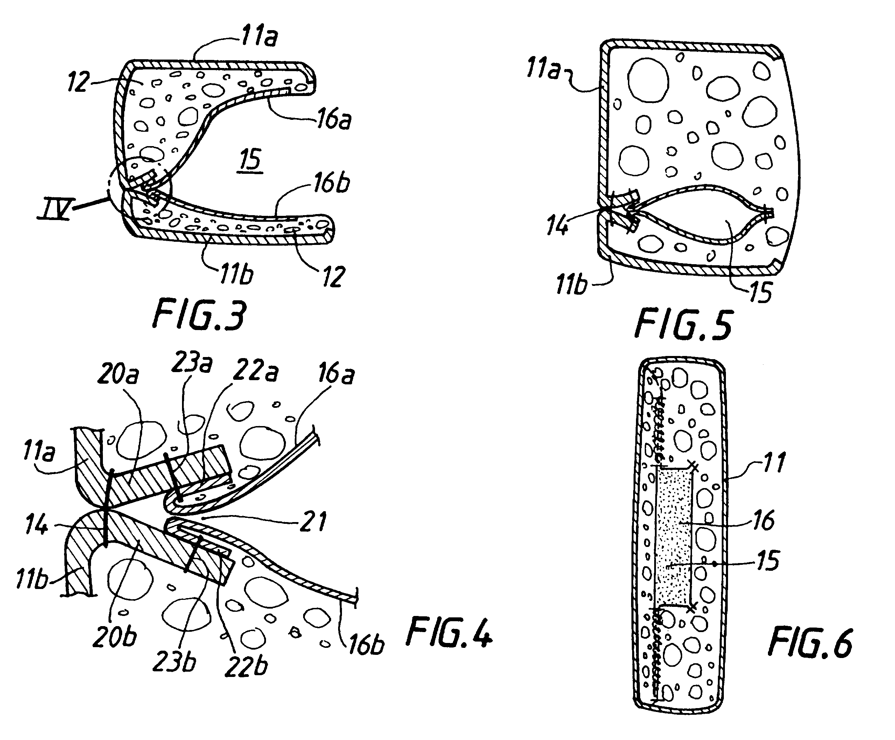

On constate sur les figures 3 et 4 que les bords des deux parties 11a et 11b de l'enveloppe, au-delà de la couture 14, sont rabattues à l'intérieur de l'élément où ils forment deux lèvres 20a et 20b.

La paroi 16 de la poche 15, formée de deux parties 16a et 16b, possède une ouverture 21 dont chaque bord 22a et 22b est retourné vers l'extérieur de la poche pour former un ourlet. La poche 15 est reliée à l'enveloppe par deux coutures 23a et 23b reliant respectivement les lèvres 20a et 20b aux bords 22a et 22b. Les parties 16a et 16b de la paroi de la poche 15 se trouvent donc dans le prolongement des parties 11a et 11b respectivement de l'enveloppe. Ainsi, lorsque la couture 14 éclate, l'intérieur de la poche se trouve mis en communication avec l'habitacle du véhicule, la mousse 12 restant confinée entre l'enveloppe et la paroi de la poche.

On voit sur les figures 3 et 5 que la poche 15, ouverte vers l'arrière dans la zone de logement du coussin de sécurité afin de permettre l'installation de ce dernier, se prolonge vers le haut et vers le bas, tout comme la couture 14. Toutefois, dans ces zones haute et basse, les parties 16a et 16b de la poche sont cousues ensemble vers l'arrière et la mousse 2 s'étend également à l'arrière de la poche.

L'ouverture 24 de la zone de logement du coussin de sécurité est fermée par une partie rapportée appropriée, non représentée. Cette partie peut d'ailleurs servir de support au coussin, le montage de ce dernier et la fermeture de l'ouverture s'effectuant en une seule opération.

## Revendications

1. Elément de véhicule automobile, susceptible de recevoir un coussin de sécurité (3) et possédant une enveloppe (1;11) garnie de mousse et munie d'une couture déchirable (4;14) sous l'effet du gonflement dudit coussin, caractérisé par le fait qu'il comporte une paroi (6;16a,16b) raccordée à ladite enveloppe aux environs de ladite couture déchirable de manière à limiter avec l'enveloppe un volume où la mousse est confinée lorsque ladite couture est déchirée, ledit coussin étant disposé à l'extérieur dudit volume.

2. Elément de véhicule selon la revendication 1, dans lequel ladite paroi forme une poche (5;15) agencée pour recevoir le coussin, ladite poche possédant une ouverture dont les bords (22a,22b) sont reliés aux lèvres (20a,20b) de ladite couture déchirable.

3. Elément de véhicule selon la revendication 2, dans lequel lesdites lèvres forment deux bordures rentrant à l'intérieur dudit élément, les bords de l'ouverture de la poche étant reliés auxdites lèvres.

4. Elément de véhicule selon la revendication 3, dans lequel lesdits bords de l'ouverture de la poche sont retournés et reliés sur leur envers auxdites lèvres.

5. Elément de véhicule selon l'une quelconque des revendications 2 à 4, dans lequel ladite ouverture de la poche et ladite couture s'étendent longitudinalement au-delà du logement du coussin de sécurité

6. Elément de véhicule selon l'une quelconque des revendications 2 à 5, possédant une partie rapportée fermant l'emplacement de ladite poche et sur laquelle est fixé ledit coussin de sécurité.

7. Elément de véhicule selon l'une quelconque des revendications 1 à 4, dans lequel ladite paroi est réalisée en feuilles de non tissé.

## Patentansprüche

1. Kraftfahrzeugelement, das einen Airbag (3) aufnehmen kann und eine Umhüllung (1; 11) besitzt, die mit Schaumstoff gefüllt und mit einer unter der Wirkung des Aufblasens des Airbags zerreißbaren Naht (4; 14) versehen ist, dadurch gekennzeichnet, daß es eine Wand (6; 16a, 16b) aufweist, die in der Nähe der zerreißbaren Naht so mit der Umhüllung verbunden ist, daß sie mit der Umhüllung ein Volumen definiert, in dem der Schaumstoff eingeschlossen ist, wenn die Naht zerrissen wird, wobei der Airbag außerhalb des Volumens angeordnet ist.

2. Fahrzeugelement nach Anspruch 1, bei dem die Wand eine Tasche (5; 15) bildet, die zur Aufnahme des Airbags angeordnet ist, wobei die Tasche eine Öffnung aufweist, deren Ränder (22a, 22b) mit den Lippen (20a, 20b) der zerreißbaren Naht verbunden sind.

3. Fahrzeugelement nach Anspruch 2, bei dem die Lippen zwei Kanten bilden, die in das Innere des Elements eintreten, wobei die Öffnungsränder der Tasche mit den Lippen verbunden sind.

4. Fahrzeugelement nach Anspruch 3, bei dem die Öffnungsränder der Tasche zurückgeführt und auf ihrer umgekehrten Seite mit den Lippen verbunden sind.

5. Fahrzeugelement nach einem der Ansprüche 2 bis 4, bei dem sich die Öffnung der Tasche und die Naht in Längsrichtung über die Aufnahme des Airbags hinaus erstrecken.

6. Fahrzeugelement nach einem der Ansprüche 2 bis 5, das einen angefügten Teil aufweist, das die Stelle der Tasche schließt und an dem der Airbag befestigt ist.

7. Fahrzeugelement nach einem der Ansprüche 1 bis 4, bei dem die Wand aus flächigem Vliesstoff hergestellt ist.

## Claims

1. Motor vehicle component capable of accommodating an airbag (3) and possessing a shell (1; 11) lined with foam and provided with stitching (4; 14) which is tearable under the action of the inflation of the said bag, characterized in that it comprises a wall (6; 16a, 16b) connected to the said shell in the vicinity of the said tearable stitching in a manner such as to define, with the shell, a space in which the foam is confined when the said stitching is torn, the said bag being disposed outside the said space.

2. Vehicle component according to Claim 1, wherein the said wall forms a pocket (5; 15) arranged to accommodate the bag, the said pocket possessing an aperture whose edges (22a, 22b) are connected to the lips (20a, 20b) of the said tearable stitching.

3. Vehicle component according to Claim 2, wherein the said lips form two rims turning back inside the said component, the edges of the aperture of the pocket being connected to the said lips.

4. Vehicle component according to Claim 3, wherein the said edges of the aperture of the pocket are turned over and connected on their reverse to the said lips.

5. Vehicle component according to any one of Claims 2 to 4, wherein the said aperture of the pocket and the said stitching extend lengthwise beyond the housing of the airbag.

6. Vehicle component according to any one of Claims 2 to 5, possessing an attached part which closes the position of the said pocket and to which the said airbag is fixed.

7. Vehicle component according to any one of Claims 1 to 4, in which the said wall is made from sheets of nonwoven.
